Europäisches Patentamt

European Patent Office

Office européen des brevets

(11) Publication number: **0 131 809**
**B1**

# EUROPEAN PATENT SPECIFICATION

(45) Date of publication of patent specification: **07.09.88**

(21) Application number: **84107440.4**

(22) Date of filing: **28.06.84**

(51) Int. Cl.⁴: **H 05 K 13/00, B 28 D 5/02**

(54) **Dicing apparatus.**

(30) Priority: **08.07.83 JP 124517/83**

(43) Date of publication of application:
**23.01.85 Bulletin 85/04**

(45) Publication of the grant of the patent:
**07.09.88 Bulletin 88/36**

(84) Designated Contracting States:
**DE FR GB**

(56) References cited:
**FR-A-2 382 097**

**PATENTS ABSTRACTS, vol. 6, no. 6 (E-89)884r,
14th January 1982**

(73) Proprietor: **FUJITSU LIMITED
1015, Kamikodanaka Nakahara-ku
Kawasaki-shi Kanagawa 211 (JP)**

(72) Inventor: **Tanizaki, Akinori
32-20, Kaminagaya 1-chome
Konan-ku Yokohama-shi Kanagawa, 233 (JP)**
Inventor: **Ando, Noboru
7-35, Higashirinkan 8-chome
Sagamihara-shi Kanagawa, 228 (JP)**
Inventor: **Terayama, Satoshi
407-1, Miyauchi, Nakahara-ku
Kawasaki-shi Kanagawa, 211 (JP)**
Inventor: **Nakao, Kunimichi
2-4-204, Kirigaoka 4-chome
Midori-ku Yokohama-shi Kanagawa, 221 (JP)**

(74) Representative: **Seeger, Wolfgang, Dipl.-Phys.
SEEGER & SEEGER Patentanwälte & European
Patent Attorneys Gottfried-Böhm-Ring 27
D-8000 München 70 (DE)**

## Description

This invention relates to a dicing apparatus which is for the microelectronic circuit fabrication such as semi-conductor integrated circuit or large scale integrated circuit fabrication separating a wafer into individual small-dimensioned die.

Generally, there are three types of the dicing apparatus; a diamond scribing, a laser scribing, and a diamond wheel sawing type. Above all, this invention relates to the diamond wheel sawing type which cuts the wafer by a rotating diamond dicing blade. To fabricate precisely, the dicing blade has a very sharp circle edge like 10—30 μm thickness and rotates at very high speed like 20,000—30,000 revolutions per minute. Therefore, the dicing blade is formed in a very thin disk having a hole at the center and is fitted to a rotating spindle being caught between two flanges.

Furthermore, the dicing apparatus has a cooling system which pours coolant against a cutting interface. Water is usually used as a coolant spurting from a coolant nozzle so as to: firstly lower the temperature at the cutting interface; secondly provide lubrication between the cutting edge and the wafer; and finally clean cutting debris away from the cutting area. The present invention especially relates to cleaning the cutting debris improving the water pouring mechanism of the cooling system, because it has been a great deal of trouble that the cutting debris causes cutting objects such as the wafers and dice to damage in the prior art.

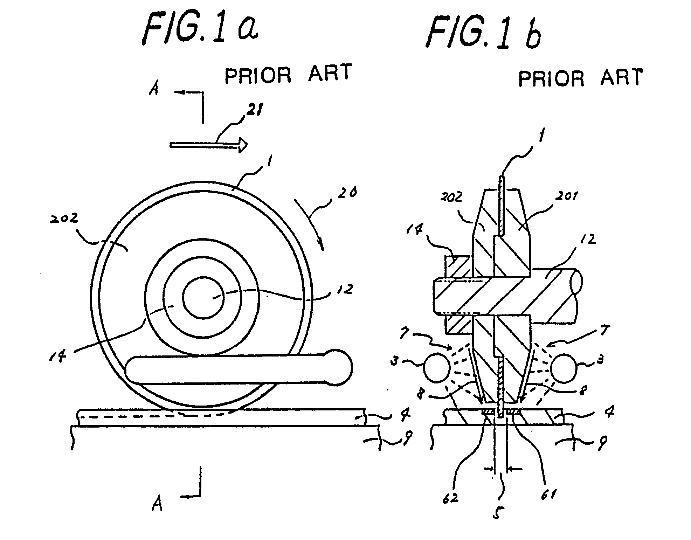

Figs. 1a and 1b show the illustrating diagrams of the dicing apparatus of the prior art using a dicing blade; Fig. 1a shows the front view and Fig. 1b shows the sectional view at A—A in Fig. 1a. In the figures, reference numeral 1 is a dicing blade which is caught by flanges 201 and 202 from both sides of the dicing blade, fitted to a spindle 12, and fixed by a nut 14, each 3 is a coolant nozzle with a coolant pipe from which cooling water 7 spurts and flows along a direction 8 because of the rotation of flanges 201 and 202 and blade 1, 4 is a wafer to be cut, 5 is a dicing street along which the wafer 4 is cut and separated to dice, 61 and 62 are bonding pads on each of which a lead wire is bonded in the process of die assembling, 9 is a stage on which the wafer is mounted to be cut, an arrow 20 indicates a rotating direction of the dicing blade 1, and an arrow 21 indicates a running direction of the rotating spindle 12.

There are two cutting modes when the dicing blade saws the wafer: one is a up-cut mode and the other is a down-cut mode. Fig. 1a shows that the dicing apparatus is working under the down-cut mode, if the direction of 20 or 21 was reversed, the cutting mode would be changed to a up-cut mode. Usually these two cutting modes are used to save the time of the cutting process by running the dicing blade back-and-forth on the wafer. However, when the dicing blade works under the down-cut mode, plenty of cutting debris hit the surface of the wafer with the cooling water splashed by the rotating flanges causing the bonding pads on the wafer such as 61 and 62 to damage.

The surface of the wafer 4 is coated by the coating material such as a Silicon Dioxide or Phospho-Silicate Glass to protect the fabricated microelectronic circuit on the wafer from the damage and dirt. However, the coating material can not be applied on the bonding pads and the dicing streets, because the bonding pads are for bonding the lead wires and the dicing streets are for cutting the wafer.

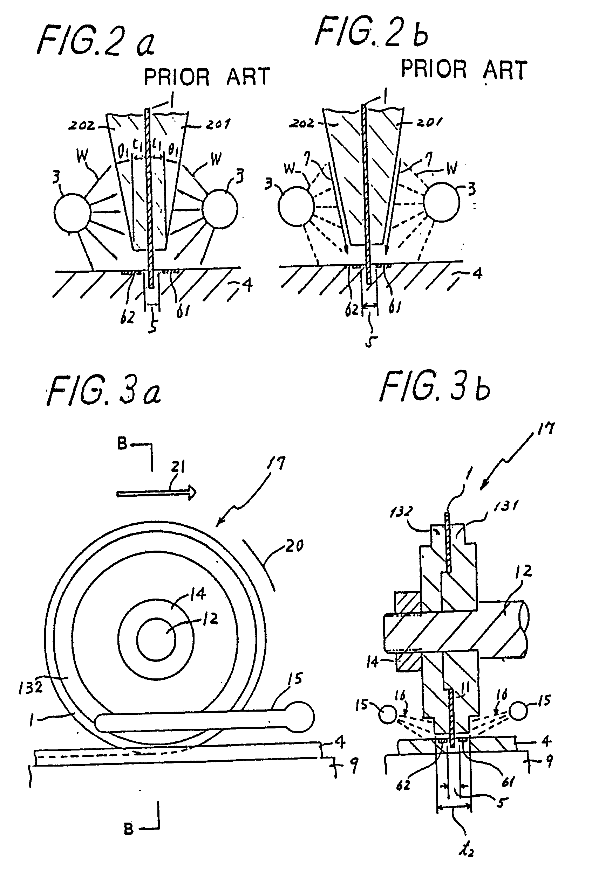

Above all, the bonding pads are very dilicate, because they are made of the metal like aluminum, so the cutting debris easily sticks into them. If so, poor bonding or increase of connected resistance will occur after bonding; this has been really a big problem because this has often deteriorated the quality and reliability of a fabricated semiconductor die. The problem in the prior art will be explained more in Figs. 2a and 2b.

Fig. 2a is a diagram around the cutting interface using the dicing apparatus of the prior art. Fig. 2b is also a diagram of the same cutting interface especially showing the flow of the cooling water being poured against the cutting interface. In the figures, reference numerals having the same numerals to Figs. 1a and 1b indicate the same objects.

As shown in Fig. 2a, in the dicing apparatus of the prior art, the flanges 201 and 202 are made so that each flange becomes thin to decrease the weight of the flanges to maintain the high speed rotation of the dicing blade. So, the width ($t_1$) at the circumference of the flange edge is so thin as 200—300 μm, and an angle ($\theta_1$) between the tapered side-surface of the flange 201 or 202 and the side-surface of the dicing blade is so narrow as 10—12 degrees. On the other hand, each bonding pad is usually located so that the distance from the center of the dicing street 5 to the center of the bonding pad is approximately 100 μm. Consequently, as shown in Fig. 2b, the cooling water 7 spurting out from the coolant nozzle 3 is splashed at the tapered side-surface of the flange 201 or 202 and flows along the tapered side-surface of the flange by the centrifugal force of the flange rotation. The water flow 7 shows this. Therefore, the cooling water violently hits the bonding pads 61 or 62 and behaves like a hammer, so that the water sticks the cutting debris, which are on the bonding pad, into the bonding pad, and in other case, the water carries the cutting debris and sticks them into the bonding pad 61 or 62. This has been a big trouble to fabricate the microelectronic dice by the dicing apparatus using the dicing blade of the prior art.

The purpose of the present invention is to avoid the cutting debris sticking into the bonding pad on account of the cooling water accelerated by the side-surfaces of the rotating flanges which catch the dicing blade, when the dicing apparatus applying the rotating dicing blade to cut the microelectronic wafer under the down-cut mode. This purpose is achieved by the features of the specific clause of claim 1. As the effect of the present invention, the surface of the bonding pad can be kept clean, so that the wrong bonding connection by the cutting debris can be avoided. As a result, the quality and the reliability of a fabricated semiconductor die and the yield of the semiconductor device production have been conspicuously improved.

Brief Description of the Drawings

Fig. 1a is a schematic front view of the prior art dicing apparatus.

Fig. 1b is a schematic sectional view at A—A in Fig. 1a of the prior art dicing apparatus.

Fig. 2a is a fragmentary sectional view of the flanges, the dicing blade, and the coolant nozzles of the prior art with the cutting interface.

Fig. 2b is a equal fragmentary sectional view to Fig. 2a showing the cooling water flowing along the rotating flanges and dicing blade.

Fig. 3a is a schematic front view of the embodiment of the present invention dicing apparatus.

Fig. 3b is a schematic sectional view at B—B in Fig. 3a of the embodiment of the present invention dicing apparatus.

Fig. 4a is a fragmentary sectional view of the flanges of the present invention and the dicing blade with the cutting interface showing the cooling water flows along the rotating flanges and dicing blade.

Fig. 4b is a fragmentary sectional view of another flange of the present invention and the dicing blade with the cutting interface showing the cooling water flowing along the rotating flanges and dicing blade.

Fig. 4c is a fragmentary sectional view of still another flange of the present invention and the dicing blade with the cutting interface showing the cooling water flows along the rotating flanges and dicing blade.

Fig. 5a is a schematic front view of the coolant nozzle of the present invention.

Fig. 5b is a schematic sectional view of the coolant nozzle of the present invention of Fig. 5a.

Fig. 6a is a schematic front view of another coolant nozzle of the present invention.

Fig. 6b is a schematic sectional view of the coolant nozzle of the present invention of Fig. 6a.

Fig. 7a is a schematic front view of still another coolant nozzle of the present invention.

Fig. 7b is a schematic sectional view of the coolant nozzle of the present invention of Fig. 7a.

Fig. 8a is a schematic front view of a further coolant nozzle of the present invention.

Fig. 8b is a schematic sectional view of the coolant nozzle of the present invention of Fig. 8a.

Description of the Preferred Embodiment

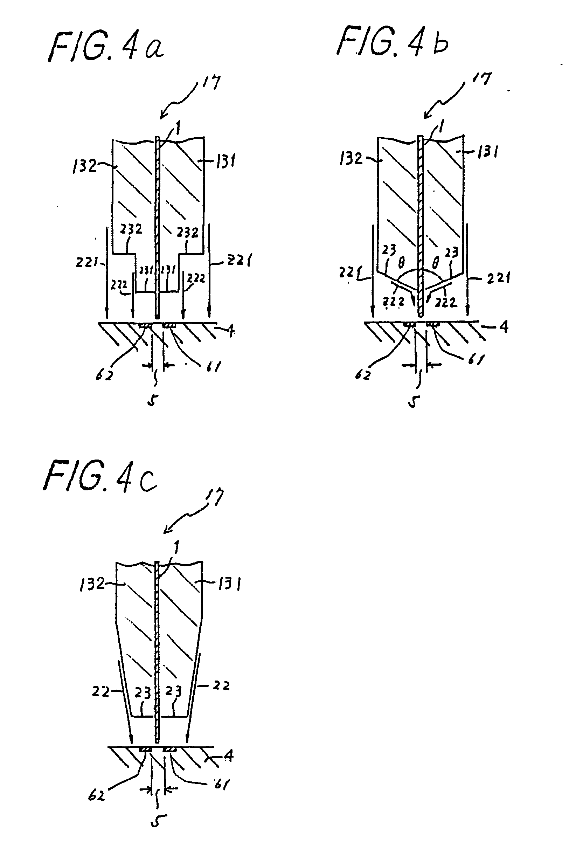

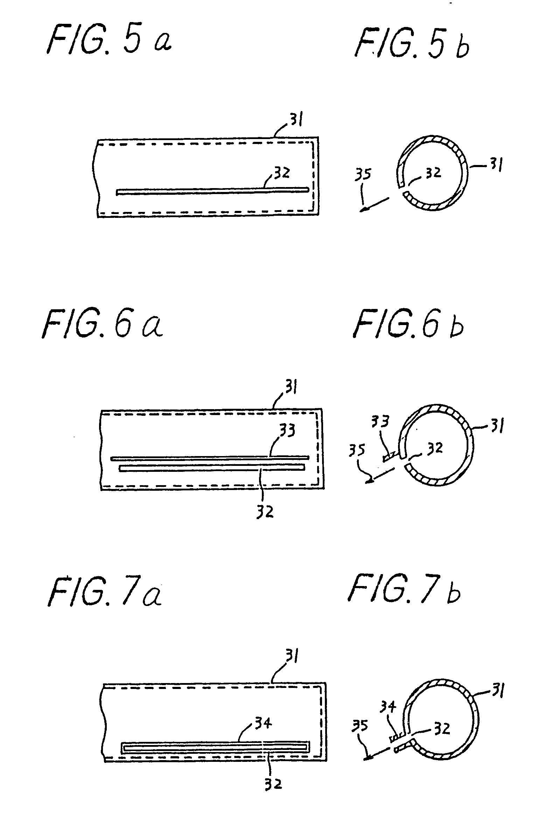

The preferred embodiment of the present invention will be disclosed showing Figs. 3, 4 and 5. Fig. 3 shows an illustrating diagram of an embodiment of the invented dicing apparatus, Fig. 4 depicts several embodiments of improved flanges and the flows of cooling water, and Fig. 5 depicts several embodiments of coolant nozzles.

Figs. 3a and 3b are similar figures to Figs. 1a and 1b except for the flanges and the coolant nozzles. Fig. 3a is a front view of the dicing apparatus, and Fig. 3b is a sectional view at B—B in Fig. 3a. In the figures, reference numerals having the same numerals to Figs. 1a and 1b correspond individually the same objects to them, reference numeral 131 and 132 show the embodiments of flanges, 15 shows the embodiment of a coolant nozzle, dotted lines 16 show the cooling water pouring against the cutting interface from the nozzle 15, and 17 shows a dicing wheel which is a rotating body comprising the flanges 131 and 132 and the dicing blade 1 being put between the flanges.

Fig. 3a shows the dicing apparatus of the present invention which is sawing the semiconductor wafer. The rotating direction 20 and running direction 21 show that the dicing apparatus works under the down-cut mode. In the figure, the present invention is applied to the flanges 131 and 132 and the coolant nozzle 15. As seen in Fig. 3b, the side-surfaces of the flanges 131 and 132 are in parallel with the side-faces of the dicing blade 1, in other words, the side-surfaces of the flanges 131 and 132 and the upper surface of the wafer 4 meet at right angles, and the thickness ($t_2$) of the flange edge part of the dicing wheel 17 is larger than the distance between the outer sides of bonding pads 61 and 62 putting the cutting street 5 between them; for example, $t_2$ is 1 mm when the distance between the outer sides of bonding pads 61 and 62 is 200—400 μm. That is, the extending surface of the side-surface of the flange 131, 132 crosses the wafer 4 at the position apart from the bonding pads 61, 62 in some distance. As a result, the cooling water splashed by the rotating dicing wheel 17 at the high speed can be poured on the surface of the wafer 4 avoiding the direct collision of the cooling water on the bonding pads 61 and 62. Besides, the thickness of the dicing wheel 17 near by the spindle 12 is set larger than $t_2$ as shown in Fig. 3b, this thickness is mainly to keep the strength of the flanges 131 and 132, but there is another effect to improve the cooling water flow. This will be disclosed in the following explanation of Fig. 4a.

The flange 131 and 132 in Fig. 3a and 3b are shown as an embodiment of the flange, but there are other embodiments of the present invention. Fig. 4a shows the embodiment of the flange extracted from Figs. 3a and 3b, Figs. 4b and 4c show other embodiments of the flanges. In Figs. 4a, 4b and 4c, the objects having the same reference numerals to Figs. 3a and 3b are for the same objects to them, reference numeral 23, 231 or 232 is respectively an edge-face at the circumference of the flanges 131 and 132, and an arrow of reference numeral 22, 221 or 222 shows respectively an improved flow of the cooling water.

In Fig. 4a, the improved flow of the cooling water is explained more. There are two kinds of the cooling water flow in this case; one is an outer flow 221 and the other is an inner flow 222, each flow works for cooling and lubricating the cutting interface, and cleaning the debris away from the cutting area, however a major flow is the outer flow 221 and the inner flow 222 is a minor flow. As mentioned before, the distance between the flow 222 at both sides of the dicing wheel 17 is larger than the distance between the outer sides of the bonding pads 61 and 62 looking from the dicing street 5. Furthermore, major cooling water of the flow 221 at both sides of the dicing wheel 17 are poured on the respective portions of the surface of the wafer 4, each portion is in sufficient distance from the bonding pad 61 or 62, on the other hand, the cooling water of the flow 222 being poured around the bonding pads 61 and 62 are minor, the force of the cooling water of the flow 222 is so weak that the debris on the bonding pads 61 and 62 can not be stuck into the pads. Consequently, damaging of the bonding pads 61 and 62 by the debris can be avoided.

In the embodiment of Fig. 4b, the dicing wheel 17 is so thick as 3—4 mm to maintain the strength of the flanges 131 and 132 and the thickness is given as far as approximately the edge of the flange circumference, the side surface of the flanges 131 and 132 are in parallel with the surface of the dicing blade 1, and each edge-surface (reference numeral 23) at the circumference of flange 131 or 132 makes an angle θ so as to be more than 60 degrees to the surface of the dicing blade 1. Therefore, the cooling water poured onto both sides of the dicing wheel 17 from the nozzles is accelerated by the centrifugal force of the rotating dicing wheel 17 and is splashed along the flow 221 hitting violently respective portions of the surface of the wafer 4, however each portion is in sufficient distance from the bonding pad 61 or 62. While the minor cooling water flows along the flow 222 and is poured on the cutting interface, however, as the force of the minor cooling water is weak and it is not directed to the bonding pads 61, 62 directly, the bonding pads 61 and 62 are not damaged by the cutting debris. Consequently, the damage of the bonding pads 61 and 62 by the cutting debris can be avoided.

In the embodiment of Fig. 4c, the flanges 131 and 132 are tapered so as to decrease the weight of the dicing wheel 17. In this structure, the cooling water at the both side of the dicing wheel 17 are accelerated by the centrifugal force of the rotating dicing wheel 17 and each of the cooling water is poured on a portion of the surface of the wafer 4. Therefore, in this case, the tapered angle must be taken so that the portion is in sufficient distance from the bonding pad 61 or 62.

As mentioned before, the coolant nozzle is also the point of the present invention. As shown in Figs. 3a and 3b of the present invention, the direction of each cooling water 16 spurted from respective coolant nozzle 15 is improved so that the cooling water from nozzle 15 is poured more aslant than that of the prior art to the surface of the cutting interface, furthermore, as the thickness of the flange of the present invention becomes thick, the coolant nozzle 15 must be brought closer to the surface of the wafer 4 comparing with the prior art. Another point is that, since the quantity of the cooling water pouring to the cutting interface of the dicing blade caused by the centrifugal force is small in the present invention, the nozzle 15 is a horizontal slit so that the cooling water is concentrated on to the cutting interface of the dicing blade. As a result, the cooling water can be supplied sufficiently to the cutting interface, so the cutting speed can be increased without reducing the cutting quality.

Figs. 5a, 5b; 6a, 6b; 7a, 7b show the diagrams to illustrate the embodiments of the invented nozzles. In the figures, each figure having mark "a" shows the side view and having mark "b" shows the cutting view, reference numeral 31 is a cooling water supply pipe, 32 is a slit for the cooling water spurting, 33 is an upper guard to prevent the cooling water spurting upward from the slit 32 and guide it downward to let it pour the cutting interface, 34 is a nozzle guide to guide the cooling water spurting from the slit 32 to the designated cutting interface.

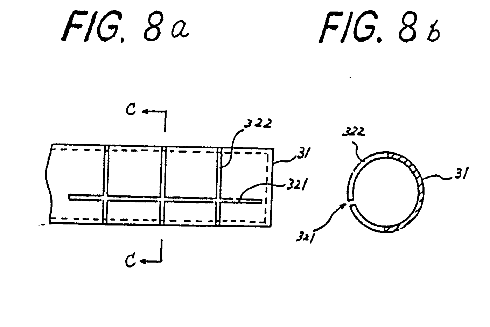

The slit which runs in parallel with the axis of the coolant pipe; in parallel with the surface of the wafer, such as the slit 32 shown in Fig. 5a, 6a, or 7a can be applied to the coolant pipe of the prior art having a plurality of the slits provided perpendicularly to the axis of the coolant pipe or to the surface of the wafer. This is shown in Fig. 8a and 8b; Fig. 8a is a front view of the embodiment and Fig. 8b shows a sectional view at C—C in Fig. 8a of the embodiment. In this figure, 31 is a coolant pipe, 322 are vertical slits of the prior art, and 321 is a horizontal slit. As shown in this figure, even the coolant pipe of the prior art can be improved to pour the cooling water properly and effectively to the cutting interface by providing the horizontal slit 321 to the coolant pipe 31.

Applying the present invention to the dicing apparatus in such a way as mentioned above, the cutting debris on the bonding pads can be protected from sticking into the pads by the poured pressure of the cooling water, so that wrong bonding connections by the cutting debris can be avoided. As a result, the quality and the reliability of a fabricated semiconductor die and the yield of the semiconductor device production have been conspicuously improved. For example, the fraction defective assuming because of the cutting debris sticking into the bonding pads was as much as 2—3% in the prior art, however applying the present invention, this has been improved to as little as 0.2—0.3%.

## Claims

1. A dicing apparatus for separating a semiconductor wafer (4) along a cutting street (5) to a plurality of microelectronic circuit dice each having bonding pads (61, 62) near by said cutting street (5) on the surface of said wafer comprising:
a rotating spindle (12);
a couple of flanges (131, 132), between which a dicing blade (1) having parallel side-surfaces is held and fitted on said spindle which rotates said dicing blade;

a coolant nozzle provided at the side of said flanges for directing a flow of cooling substance towards a cutting interface of said dicing blade,

characterised in that the plane of each outer side-surface of the flanges (131, 132) crosses the surface of said wafer in sufficient outward distance from said bonding pad looking from said cutting street.

2. A dicing apparatus according to claim 1, characterised in that the form of the outer side-surface of each flange comprises:

a first part which is the larger part of the flange being parallel with the side-surface of said dicing blade, the flange at this first part having large thickness for keeping the strength during rotation, and this part receiving a major quantity of said cooling water being spurted on the surface of said wafer at a sufficient distance from said bonding pad; and

a second part of the side-surface which is near the circumference of said each flange being parallel with the side-surface of said dicing blade, the flange at this second part having a small thickness as compared with that of the first part of the side-surface, the total thickness of said dicing blade and the flanges at this second part being larger than the distance between the outer sides, looking from said cutting street, of said bonding pads, this part receiving a minor quantity of said cooling water being directed to said cutting interface.

3. A dicing apparatus according to claim 1, characterised in that the form of the outer side-surface of each flange comprises:

a part of the outer side-surface, which is the largest part of the flange, being parallel with the side-surface of said dicing blade, having large thickness keeping the strength of rotating said flange providing a major quantity of said cooling water being poured on a surface of said wafer which is in sufficient distance from said bonding pad so that a total thickness of said dicing blade and said flanges at said first part is larger than the distance between the outsides, looking from said cutting street, of said bonding pads; and

a second part of the outer side-surface, which is a circle edge-surface of the flange, intersecting the side-surface of said dicing blade at an angle being more than 60 degrees, providing a minor quantity of said cooling water being poured to said cutting interface.

4. A dicing apparatus according to claim 1, wherein an external form of the outer side-surface of each said flange, comprising:

a side-surface of said each flange being tapered toward the circumference of said flange near by the circumference of said dicing blade, providing a total thickness of said dicing blade and said flanges at the circumference of said each flange so that a major quantity of said cooling water which flows along said tapered side-surface of said each flange is poured to a surface of said wafer where it is in sufficient distance from said bonding pad looking from said cutting street.

5. A dicing apparatus according to claim 1, wherein each said coolant nozzle (32) is provided on each coolant pipe placed in parallel with and close to the surface of said wafer at each side of and close to the side-surface of said each flange, and said coolant nozzle comprises a slit obliquely down side of said coolant pipe in parallel with the surface of said wafer.

6. A dicing apparatus according to claim 5, wherein a guard (33) is fixed at the upper side of said slit in parallel with said slit for preventing said cooling water tending to spurt upward from said slit.

7. A dicing apparatus according to claim 5, wherein a nozzle guide (34) is fixed around said slit for guiding said cooling water from said slit (32) to spurt toward said cutting interface.

8. A dicing apparatus according to claim 5, wherein said slit (321) being in parallel with the surface of said wafer is provided to said each coolant pipe, combining with a plurality of slits (321) which are separately provided to said each coolant pipe perpendicularly to the surface of said wafer.

**Patentansprüche**

1. Schneidvorrichtung zum Trennen eines Halbleiterwafers (4) längs einer Schneidestraße (5), um eine Vielzahl von mikroelektronischen Schaltungsteilen zu erhalten, die jeweils Bonding-pads (61, 62) nahe der Schneidestraße (5) auf der Oberfläche des genannten Wafers haben, mit:

einer rotierenden Spindel (12);

einen Paar von Flanschen (131, 132), zwischen denen ein Schneideblatt (1), welches parallele Seitenoberflächen hat, gehalten und auf der genannten Spindel aufgepaßt ist, welche das genannte Schniedeblatt rotiert;

einer Kühldüse, die an der Seite der genannten Flansche vorgesehen ist, um einen Strom von kühlender Substanz in Richtung einer schneidenden Schnittstelle des genannten Schneideblattes zu richten,

dadurch gekennzeichnet, daß die Ebene von jeder äußeren Seitenoberfläche der Flansche (131, 132) die Oberfläche des genannten Wafers in hinreichendem äußeren Abstand von dem genannten Bonding-pad kreuzt, von der Schneidestraße aus gesehen.

2. Schneidvorrichtung nach Anspruch 1, dadurch gekennzeichnet, daß die Form der äußeren Seitenoberfläche von jedem Flansch umfaßt:

einen ersten Teil, welcher der größte Teil des genannten Flansches ist, der parallel zu der Seitenoberfläche des genannten Schneidblattes angeordnet ist, wobei der Flansch bei diesem ersten Teil eine große Dicke hat, um die Stärke während der Rotation aufrechtzuerhalten, und dieser Teil eine größere Menge des genannten Kühlwassers empfängt, welches in einem hinreichenden Abstand von dem Bonding-pad auf die Oberfläche des Wafers gespritzt wird; und

einen zweiten Teil der Seitenoberfläche, welcher nahe dem Umfang von jedem Flansch ist, der parallel zu der Seitenoberfläche des genannten Schneidblattes ist, wobei der Flansch an diesem zweiten Teil eine kleine Dicke hat, in Vergleich mit derjenigen des ersten teils der Seitenoberfläche, wobei die gesamte Dicke des genannten Schneidblattes und der Flansche bei diesem zweiten Teil größer als der Abstand zwischen den äußeren Seiten der genannten Bonding-pads, von der Schneidestraße aus gesehen, ist, und dieser Teil eine kleinere Menge des Kühlwassers empfängt, welches auf die schneidende Schnittstelle gerichtet wird.

3. Schneidvorrichtung nach Anspruch 1, dadurch gekennzeichnet, daß die Form der äußeren Seitenoberfläche von jedem Flansch umfaßt:

einen Teil der äußeren Seitenoberfläche, der der größte Teil des Flansches ist, parallel zu der Seitenoberfläche des genannten Schneidblattes, der eine große Dicke hat, welche die Stärke bei der Rotation des Flansches aufrechterhält und bewirkt, daß eine größere Menge des genannten Kühlwassers auf eine Oberfläche des genannten Wafers, welche in hinreichendem Abstand von dem genannten Bonding-pad ist, gegossen wird, so daß eine gesamte Dicke des genannten Schneidblattes und der genannten Flansche bei dem genannten ersten Teil größer als der Abstand zwischen den Außenseiten der genannten Bonding-pads ist, von der Schneidstraße aus gesehen; und

einen zweiten Teil der äußeren Seitenoberfläche, die eine kreisförmige Randoberfläche des Flansches ist, die die Seitenoberfläche des Schneidblattes unter einem Winkel schneidet, welcher größer als 60 Grad ist, und bewirkt, daß eine kleinere Menge des genannten Kühlwassers auf die genannte schneidende Schnittstelle gegossen wird.

4. Vorrichtung nach Anspruch 1, bei der eine externe Form der äußeren Seitenoberfläche von jedem Flansch umfaßt:

eine Seitenoberfläche von jedem Flansch, die zu dem Umfang des genannten Flansches nahe dem Umfang des genannten Schneidblattes abgeschrägt ist und eine solche totale Dicke des genannten Schneidblattes und der genannten Flansche bei dem Umfang von jedem Flansch ergibt, daß eine größere Menge des Kühlwassers, welches längs der abgeschrägten Seitenoberfläche von jedem Flansch fließt, auf eine Oberfläche des genannten Wafers gegossen wird, welche in einem hinreichenden Abstand von dem Bonding-pad ist, von der Schneidestraße aus gesehen.

5. Vorrichtung nach Anspruch 1, bei der jede Kühldüse (32) auf einem Kühlrohr vorgesehen ist, welches parallel zu und nahe bei der Oberfläche des genannten Wafers auf jeder Seite von oder nahe bei der Seitenoberfläche von jedem Flansch angeordnet ist, und die genannte Kühldüse einen Schlitz schräg an der Unterseite des genannten Kühlrohrs parallel zu der Oberfläche des genannten Wafers umfaßt.

6. Schneidvorrichtung nach Anspruch 5, bei der eine Schutzeinrichtung (33) an der oberen Seite des genannten Schlitzes parallel zu dem genannten Schlitz vorgesehen ist, um zu verhindern, daß das Kühlwasser dazu tendiert, von dem gennanten Schlitz nach oben zu spritzen.

7. Schneidvorrichtung nach Anspruch 5, bei der eine Düsenführung (34) um den Schlitz fixiert ist, um das genannte Kühlwasser von dem genannten Schlitz (32) zu führen, um es zu der schneidenden Schnittstelle zu spritzen.

8. Vorrichtung nach Anspruch 5, bei der der Schlitz (321) parallel zu der Oberfläche des genannten Wafers für jedes Kühlrohr vorgesehen ist, kombiniert mit einer Vielzahl von Schlitzen (321), welche separat für jedes Kühlrohr senkrecht zu der Oberfläche des genannten Wafers vorgesehen sind.

**Revendications**

1. Appareil de découpage destiné à séparer une tranche semi-conductrice (4) le long d'une voie (5) de coupe en plusiers pastilles de circuits microélectroniques ayant chacune des plages de connexion (61, 62) près de la voie de coupe (5) à la surface de la tranche, comprenant:

une broche rotative (12), deux flasques (131, 132) entre lesquels est retenue une lame (1) de découpage ayant des faces latérales parallèles et montée sur la broche qui fait tourner la lame de découpage, et

une base de fluide de refroidissement placée sur le côté des flasques et destinée à diriger un courant d'une substance de refroidissement vers une interface de coupe de la lame de découpage,

caractérisé en ce que le plan de chaque surface latérale externe des flasques (131, 132) recoupe la surface de la tranche à une distance suffisante de la plage de connexion, à partir de la voie de découpe.

2. Appareil de découpage selon la revendication 1, caractérisé en ce que la forme de la surface latérale externe de chaque flasque comprend:

une première partie qui est la partie la plus grande du flasque, qui est parallèle à la surface latérale de la lame de découpage, la flasque, dans cette première partie, ayant une épaisseur importante afin que la résistance mécanique soit conservée pendant la rotation, et cette partie recevant la plus grande quantité d'eau de refroidissement qui est projetée à la surface de la tranche à une distance suffisante de la plage de connexion, et

une seconde partie de la surface latérale qui est proche de la circonférence de chaque flasque et qui est parallèle à la surface latérale de la lame de découpage, le flasque, dans cette seconde partie, ayant une épaisseur petite par rapport à celle de la première partie de la surface latérale, l'épaisseur totale de la lame de découpage et des flasques, dans cette seconde partie, étant supérieure à la distance comprise entre les côtés externes des plages de connexion, à partir de la voie de découpe, cette partie recevant une petite quantité d'eau de refroidissement qui est dirigée vers l'interface de coupe.

3. Appareil de découpage selon la revendication 1, caractérisé en ce que la forme de la surface latérale externe de chaque flasque comprend:

une première partie de surface latérale externe, constituant la partie la plus large du flasque, parallèle à la surface latérale de la lame de découpage, ayant une grande dépaisseur donnant une bonne résistance mécanique pendant la rotation, le flasque transmettant la plus grande quantité de l'eau de refroidissement déversée sur une surface de la tranche à une distance suffisante de la plage de connexion pour que l'épaisseur totale de la lame de découpage et des flasques, dans la première partie, soit supérieure à la distance comprise entre les parties extérieures des plages de connexion, à partir de la voie de découpe, et

une seconde partie de surface latérale externe qui est une surface de bord circulaire du flasque, recoupant la surface latérale de la lame de découpage suivant un angle supérieur à 60°, et transmettant une petite quantité d'eau de refroidissement déversée à l'interface de coupe.

4. Appareil de découpage selon la revendication 1, dans lequel la forme externe de la surface latérale externe de chaque flasque comporte:

une surface latérale de chaque flasque inclinée vers la circonférence du flasque à proximité de la circonférence de la lame de découpage, donnant une épaisseur totale de la lame de découpage et des flasques, à la circonférence de chaque flasque, telle que la plus grande partie d'eau de refroidissement qui s'écoule le long de la surface latérale inclinée de chaque flasque est déversée sur une surface de la tranche qui se trouve à une distance suffisante de la plage de connexion, à partir de la voie de découpe.

5. Appareil de découpage selon la revendication 1, dans lequel la buse (32) de fluide de refroidissement est disposée sur chaque tuyauterie de fluide de refroidissement qui est parallèle à la surface de la tranche de proche de celle-ci de chaque côté de la surface latérale de chaque flasque et près de cette surface latérale, et la buse de fluide de refroidissement est une fente dirigée obliquement vers le bas à partir de la tuyauterie de fluide de refroidissement, parallèlement à la surface de la tranche.

6. Appareil de découpage selon la revendication 5, dans lequel un dispositif protecteur (33) est fixé à la face supérieure de la fente parallèlement à celli-ci afin qu'il empêche le passage d'eau de refroidissement tendant à gicler vers le haut à partir de la fente.

7. Appareil de découpage selon la revendication 5, dans lequel un guide (34) de buse est fixé autour de la fente afin qu'il guide l'eau de refroidissement provenant de la fente (35) de manière que celle-ci soit projetée vers l'interface de coupe.

8. Appareil de découpage selon la revendication 5, dans lequel la fente (321) parallèle à la surface de la tranche est formée dans chaque tuyauterie de fluide de refroidissement, en combinaison avec plusieurs fentes (321) formées séparément dans chaque tuyauterie de fluide de refroidissement en direction perpendiculaire à la surface de la tranche.

# FIG.1 a

PRIOR ART

# FIG.1 b

PRIOR ART

*FIG. 2 a*

PRIOR ART

*FIG. 2 b*

PRIOR ART

*FIG. 3 a*

*FIG. 3 b*

*FIG. 4 a*

*FIG. 4 b*

*FIG. 4 c*

## FIG. 5 a

## FIG. 5 b

## FIG. 6 a

## FIG. 6 b

## FIG. 7 a

## FIG. 7 b

# FIG. 8 a    FIG. 8 b